(19) Europäisches Patentamt
European Patent Office
Office européen des brevets

(11) **EP 3 289 835 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **16722814.7**

(22) Anmeldetag: **28.04.2016**

(51) Internationale Patentklassifikation (IPC):
**H05B 47/155** (2020.01)    **H05B 47/16** (2020.01)
**H05B 47/19** (2020.01)

(52) Gemeinsame Patentklassifikation (CPC):
**H05B 47/155; H05B 47/16; H05B 47/19;**
H05B 47/195; Y02B 20/40

(86) Internationale Anmeldenummer:
**PCT/EP2016/059492**

(87) Internationale Veröffentlichungsnummer:
**WO 2016/174139 (03.11.2016 Gazette 2016/44)**

(54) **VERFAHREN UND SYSTEM ZUR ÜBERMITTLUNG VON STEUERBEFEHLEN FÜR VERTEILT ANGEORDNETE EINHEITEN**

METHOD AND SYSTEM FOR COMMUNICATING CONTROLMESSAGES VOR SEPERATE UNITS

PROCÉDÉ ET SYSTÈME DE TRANSFERT D'INSTRUCTIONS DE COMMANDE POUR DES UNITÉS DISPOSÉES DE MANIÈRE RÉPARTIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015 DE 102015207985**

(43) Veröffentlichungstag der Anmeldung:
**07.03.2018 Patentblatt 2018/10**

(73) Patentinhaber: **Zumtobel Lighting GmbH**
**6850 Dornbirn (AT)**

(72) Erfinder:
• **ZEIDLER, Gerd**
**6912 Hörbranz (AT)**
• **LOURENCO, Nuno**
**6912 Hörbranz (AT)**

(74) Vertreter: **Thun, Clemens**
**Mitscherlich PartmbB**
**Patent- und Rechtsanwälte**
**Karlstraße 7**
**80333 München (DE)**

(56) Entgegenhaltungen:
EP-A2- 2 440 017          WO-A1-2005/091573
WO-A1-2008/152554      JP-A- 2001 093 675
US-A1- 2006 126 617      US-A1- 2011 305 200

## Beschreibung

Die vorliegende Erfindung betrifft ein Verfahren zur Übermittlung von Steuerbefehlen in einem System verteilt angeordneter Einheiten, bspw. in einem Beleuchtungssystem mit verteilt angeordneten Leuchten. Ferner betrifft die Erfindung ein entsprechendes System mit verteilt angeordneten Einheiten, wobei mit Hilfe der Erfindung insbesondere ein zeitlich synchrones Verhalten aller Einheiten bei der Ausführung von Steuerbefehlen angestrebt wird.

Größere Beleuchtungssysteme, bei denen eine Vielzahl von Leuchten bspw. von einer zentralen Steuereinheit aus angesteuert werden, bringen im Vergleich zu jeweils individuell lokal angesteuerten Beleuchtungseinheiten den Vorteil mit sich, dass einfacher und effizienter ein aufeinander abgestimmtes Verhalten aller Leuchten erzielt werden kann. Dies bedeutet bspw., dass alle Leuchten innerhalb eines vorgegebenen Zeitraums, z.B. während der üblichen Arbeits- oder Öffnungszeiten, gemeinsam aktiviert sind und ihre Helligkeit derart aufeinander abstimmen, dass insgesamt gesehen eine homogene Lichtabgabe erzielt wird. Ein derartiges aufeinander abgestimmtes Verhalten ist bspw. in öffentlichen Gebäuden oder größeren Räumlichkeiten wie bspw. Großraumbüros oder Werkhallen erwünscht, da sich hierdurch ein deutlich angenehmeres Erscheinungsbild ergibt.

Ein bei derartigen Systemen bekanntes Problem besteht dabei darin, dass zwar hinsichtlich der Lichtabgabe verhältnismäßig einfach ein aufeinander abgestimmtes Verhalten der Leuchten erzielt werden kann, ein zeitlich synchrones Verhalten der Leuchten hingegen deutlich schwieriger zu realisieren ist. Grund hierfür ist, dass in der Regel die Leuchten nicht selbständig zu bestimmten vorgegebenen Zeitpunkten ihr Verhalten ändern, sondern stattdessen von einem einzelnen primären Befehlsgeber ein Steuerbefehl ausgegeben wird, der von allen Leuchten empfangen und entsprechend umgesetzt werden soll. Die Übermittlung dieses Steuerbefehls an alle Leuchten des Systems nimmt jedoch je nach Position der Leuchten eine unterschiedliche Zeit in Anspruch. Dies liegt daran, dass üblicherweise der von dem primären Befehlsgeber ausgegebene ursprüngliche Befehl nicht alle Leuchten erreicht, sondern stattdessen von einzelnen Einheiten des Systems wiederholt, also erneut ausgesendet wird, so dass er sich kaskadenartig über das gesamte System hinweg ausbreitet, bis er tatsächlich von allen Leuchten empfangen wurde. Das Empfangen und erneute Senden des Steuerbefehls nimmt jedoch jeweils einen gewissen Zeitraum in Anspruch, so dass bspw. Leuchten, welche den Befehl erst nach der dritten Wiederholung empfangen, deutlich später reagieren, als diejenigen Leuchten, die den unmittelbar von dem primären Befehlsgeber ausgegebenen Steuerbefehl empfangen haben. Dies kann sich bspw. dann dadurch bemerkbar machen, dass nach einem zentral ausgegebenen Befehl zum Einschalten sich die Leuchten mit zunehmender Entfernung von dem Befehlsgeber aus erst nacheinander aktivieren, was für einen Beobachter durchaus erkennbar ist.

Die zuvor beschriebene Problematik besteht im Übrigen unabhängig davon, ob die Steuerbefehle über eine Signalleitung oder drahtlos, also z.B. per Funk oder Infrarotstrahlung übermittelt werden, da in beiden Fällen in der Regel insbesondere bei größeren Anordnungen der Steuerbefehl wiederholt gesendet werden muss, um sich über das gesamte System ausbreiten zu können. Auch betrifft die Problematik nicht nur Beleuchtungssysteme, sondern auch andere Systeme mit verteilt angeordneten Verbrauchern, bei denen gewünscht ist, dass die Verbraucher nach Ausgabe eines Steuerbefehls im Wesentlichen zeitgleich auf diesen reagieren.

Beispielsweise zeigt die US 2011/0305200A1 ein Verfahren für das Steuern eines Leuchtensystems, wobei das Leuchtensystem als ein Netzwerk angeordnet ist und eine Steuereinheit sowie eine Vielzahl von Betriebsknotenpunkten, die miteinander kommunizieren, aufweist. Das Verfahren weist die folgenden Schritte auf: Synchronisieren der Betriebsknotenpunkte mit der Steuereinheit, Bestimmen einer Menge von Betriebsknotenpunkten, die in einem Betriebsgebiet bereitgestellt sind, Abschätzen der Zustandsveränderungsverzögerung der Menge an Betriebsknotenpunkten und ein Senden eines Zustandsveränderungsbefehls zu der Vielzahl der Betriebsknotenpunkte.

In der US 2006/126617 Alund JP 2001 093675 A sind Systeme, insbesondere Beleuchtungssysteme, beschrieben, wobei eröffnet wird, dass eine zeitgleiche Umsetzung von Befehlen vorteilhaft sein kann.

Die EP 2 440 017 A2 beschreibt ein Beleuchtungssystem, mit einer Steuereinheit und mehreren Beleuchtungseinheiten. Hierbei wird vorgeschlagen über ein Datenübertragungsnetzwerk Datensignale, insbesondere Kontrollsignale, an die Beleuchtungseinheiten zu übertragen, wobei die Beleuchtungseinheiten diese Datensignale untereinander weiterverbreiten können.

Der vorliegenden Erfindung liegt deshalb die Aufgabenstellung zugrunde, bei Systemen verteilt angeordneter Verbraucher oder Einheiten die oben beschriebenen Nachteile zu vermeiden und das zeitlich aufeinander abgestimmte Verhalten der Einheiten nach Ausgabe eines zentralen Steuerbefehls zu optimieren.

Die Aufgabe wird durch ein Verfahren zur Übermittlung von Steuerbefehlen, welches die Merkmale des Anspruchs 1 aufweist, gelöst. Ferner wird die Aufgabe auch durch ein System verteilt angeordneter Einheiten gemäß Anspruch 6 gelöst. Vorteilhafte Weiterbildungen der Erfindung sind Gegenstand der abhängigen Ansprüche.

Zentraler Gedanke der erfindungsgemäßen Lösung ist, dass eine Einheit, die einen Steuerbefehl empfangen hat, diesen nicht zwingend sofort umsetzt. Stattdessen ist vorgesehen, dass der Steuerbefehl eine Information bezüglich einer bereits vergangenen Befehlsübermittlungszeit beinhaltet, wobei jede Einheit, die einen empfangenen Steuerbefehl erneut sendet, eine den Empfang und die Weiterleitung berücksichtigende Verzögerungszeit der in dem Steuerbefehl enthaltenen vergangenen Befehlsübermittlungszeit hinzufügt und den Steuerbefehl mit der hierdurch erhaltenen aktualisierten Befehlsübermittlungszeit erneut sendet, und jede Einheit auf Basis dieser Befehlsübermittlungszeit eine individuelle Wartezeit, durch Berechnen der Differenz zwischen einer jeden Einheit bekannten globalen Übermittlungsdauer und der vergangenen Befehlsübermittlungszeit, bestimmt, nach deren Ablauf erst der Steuerbefehl durch die Einheit ausgeführt wird, wobei die globale Übermittlungsdauer angibt innerhalb welcher Zeit alle verteilt angeordneter Einheiten den Steuerbefehl empfangen werden.

Erfindungsgemäß wird also ein Verfahren zur Übermittlung von Steuerbefehlen in einem System verteilt angeordneter Einheiten, insbesondere in einem Beleuchtungssystem mit verteilt angeordneten Leuchten vorgeschlagen, wobei zumindest ein Teil der Einheiten einen empfangenen Steuerbefehl erneut sendet, um eine Weiterleitung des Steuerbefehls an alle Einheiten sicherzustellen, wobei der Steuerbefehl eine Information bezüglich. einer bereits vergangenen Befehlsübermittlungszeit beinhaltet und wobei jede Einheit auf Basis der in einem empfangenen Befehl enthaltenen vergangenen Befehlsübermittlungszeit eine individuelle Wartungszeit bestimmt, nach deren Ablauf der Steuerbefehl durch die Einheit ausgeführt wird. Die Leuchten, die beispielsweise unmittelbar den von dem primären Befehlsgeber ausgegebenen Steuerbefehl empfangen, führen diesen also nicht sofort aus, sondern warten zunächst eine bestimmte Zeit ab, bevor die Befehlsumsetzung erfolgt. Diese Wartezeit kann nunmehr erfindungsgemäß auf Basis der in dem Steuerbefehl enthaltenen Befehlsübermittlungszeit derart bestimmt werden, dass der Steuerbefehl erst dann umgesetzt wird, wenn dieser auch tatsächlich von allen Teilnehmern des Systems empfangen wurde. Hierdurch wird sichergestellt, dass alle Leuchten beziehungsweise allgemein alle Einheiten des System im Wesentlichen zeitgleich reagieren und dementsprechend ein kaskadenartiges Einschalten der Leuchten verhindert wird. Zwar wird durch die erfindungsgemäße Vorgehensweise nicht zwingend ein 100% synchrones Verhalten aller Einheiten des Systems erzielt, allerdings sind die Abweichungen nur noch derart gering, dass sie von einem Beobachter kaum mehr wahrgenommen werden können. Dies gilt auch für den kritischen Fall der Leuchtenansteuerung, bei dem zeitliche Abweichungen besonders einfach beobachtbar sind. Um die Teilnehmer des Systems in die Lage zu versetzen, für sich jeweils eine individuell geeignete Wartezeit ermitteln zu können, müssen die Einheiten also wissen, welcher Zeitraum bereits seit Ausgabe des ursprünglichen Steuerbefehls vergangen ist. Dies wird erfindungsgemäß dadurch sichergestellt, dass jede Einheit, die einen empfangenen Steuerbefehl erneut sendet, eine den Empfang und die Weiterleitung berücksichtigende Verzögerungszeit der in dem Steuerbefehl enthaltenen vergangenen Befehlsübermittlungszeit hinzufügt und den Steuerbefehl dann mit der hierdurch erhaltenen aktualisierten Befehlsübermittlungszeit erneut sendet. Vorzugsweise bestimmt dann jede Einheit, die in der oben beschriebenen Weise einen empfangenen Steuerbefehl erneut sendet, ihre individuelle Wartezeit nach dem erneuten Senden des Steuerbefehls auf Basis dieser aktualisierten Befehlsübermittlungszeit.

Jeder Einheit, welche einen Befehl weiterleitet, ist also bekannt, wie viel Zeit für den Empfang und die Weiterleitung des Befehlssignals benötigt wird. Dieser wird dann der in dem empfangenen Steuerbefehl enthaltenen Befehlsübermittlungszeit hinzugefügt und als neuer aktualisierter Wert ausgegeben. Da die Signallaufzeit selbst im Vergleich zu der Zeit, die für den Empfang und das erneute Senden des Steuerbefehls benötigt wird, vernachlässigbar ist, stellt die Befehlsübermittlungszeit also in erster Linie eine Zusammenfassung der von den für die Signalübermittlung verantwortlichen Einheiten benötigten Zeiträume für den Empfang, die Verarbeitung und die Weiterleitung des Signals dar. Diese Näherung ist für den angestrebten Effekt, nämlich ein für einen Beobachter im Prinzip zeitgleiches Verhalten aller Einheiten des Systems zu erzielen, vollkommen ausreichend.

Das Berechnen der individuellen Wartezeit durch jede Einheit erfolgt dann dadurch erfolgen, dass die Differenz zwischen einer globalen Übermittlungsdauer für den Steuerbefehl und der in dem Steuerbefehl enthaltenen Befehlsübermittlungszeit ermittelt wird, wobei die globale Übermittlungsdauer angibt innerhalb welcher Zeit alle verteilt angeordneter Einheiten den Steuerbefehl empfangen werden. D.h., alle Einheiten kennen eine globale Übermittlungsdauer, die Auskunft darüber gibt, innerhalb welcher Zeit tatsächlich alle Einheiten des Systems den Steuerbefehl empfangen werden. Da den Einheiten ferner aufgrund der in dem Steuerbefehl enthaltenen Befehlsübermittlungszeit bekannt ist, wie viel Zeit bereits seit Ausgabe des ursprünglichen Steuerbefehls vergangen ist, können diese also in einfacher Weise dann feststellen, wie lange sie noch vor Ausführen des Steuerbefehls zu warten haben.

Es kann hierbei vorgesehen sein, dass die globale Übermittlungsdauer unabhängig vom Ausgangspunkt des Steuerbefehls ist und beispielsweise bei Inbetriebnahme des Systems einmalig festgelegt wird. Dies stellt die einfachste Variante dar und führt dazu, dass die globale Übermittlungsdauer auf den Extremfall abgestimmt werden muss, bei dem der Steuerbefehl an einem Ende des Systems ausgegeben wird und sich über die gesamte Anordnung der Einheiten hinweg bis zum anderen Ende hin ausbreiten muss, also die maximale Verzögerungszeit für die vollständige Ausbreitung des Steuerbefehls vorliegt. Da dies allerdings bedeuten würde, dass für den Fall, dass der Steuerbefehl bspw. eher von zentraler Position ausgegeben wird und sich dementsprechend deutlich schneller verbreitet, die Einheiten eine unnötig lange Zeit abwarten, bevor sie den Steuerbefehl synchron umsetzen, kann gemäß einer besonders bevorzugten Ausführungsform auch vorgesehen sein, dass die globale Übermittlungsdauer abhängig vom Ausgangspunkt des Steuerbefehls festgelegt wird.

Dies kann beispielsweise dadurch erfolgen, dass derjenige Befehlsgeber, der den Steuerbefehl erstmalig sendet, diesem auch eine Information hinsichtlich der globalen Übermittlungsdauer hinzufügt. In diesem Fall muss also jeder Befehlsgeber des Systems, der theoretisch erstmalig einen Steuerbefehl sendet, wissen, welche Zeit vergeht, bis sich der Steuerbefehl in dem System vollständig ausgebreitet hat. Alternativ hierzu kann auch vorgesehen sein, dass dem Steuerbefehl lediglich eine Information hinzugefügt wird, die Auskunft darüber gibt, welcher Befehlsgeber erstmalig den Steuerbefehl gesendet hat. In diesem Fall muss dann jede Einheit selbstständig die sich hieraus ergebende globale Übermittlungsdauer ermitteln. In beiden Fällen ist erforderlich, dass die entsprechenden Informationen zumindest bei erstmaliger Inbetriebnahme des Systems ermittelt werden und idealerweise während der späteren Betriebsdauer auch ggf. aktualisiert werden, da Änderungen in dem System selbst oder in dem Bereich bzw. Gebäude, in dem das System installiert wird, Auswirkungen auf die Art und Weise der Befehlsausbreitung nach sich ziehen können.

Aus den obigen Schilderungen ergibt sich, dass also zunächst das erfindungsgemäße Verfahren auf dem Gedanken beruht, dem übermittelten Steuerbefehl zeitliche Informationen hinzuzufügen und darauf basierend Wartezeiten zu berechnen. Dabei ist gemäß einer besonders bevorzugten Ausführungsform der Erfindung vorgesehen, dass die Angabe der vergangenen Befehlsübermittlungszeit, der Wartezeit sowie der globalen Übermittlungsdauer nicht auf Basis exakter Zeitwerte, sondern stattdessen in diskreten Zeitschritten erfolgt. Diese Maßnahme führt dazu, dass das Übermitteln der entsprechenden Zeiten sowie das Berechnen der Zeiträume deutlich praktikabler, insbesondere einfacher und schneller durchgeführt werden kann und ggf. auch Informationen hinsichtlich der sich ergebenden globalen Übermittlungsdauer mit wenig Aufwand gespeichert werden können. Wie nachfolgend anhand der Figurenbeschreibung näher erläutert wird, führt dies zu nur geringen Einbußen hinsichtlich des synchronen Verhaltens der Einheiten, so dass trotz allem im Vergleich zu aus dem Stand der Technik bekannten Verfahren deutliche Vorteile erzielt werden können.

Letztendlich wird mit Hilfe der erfindungsgemäßen Vorgehensweise sichergestellt, dass trotz komplexer Signalausbreitungen die Einheiten des Systems aus Sicht eines Beobachters unabhängig von der Größe des Systems zeitgleich reagieren.

Nachfolgend soll die Erfindung anhand der beiliegenden Zeichnung näher erläutert werden. Es zeigen:

Figur 1 schematisch die Ausbreitung eines Steuerbefehls in einem größeren Beleuchtungssystem;

Figur 2 den zeitlichen Ablauf bei der Ausbreitung des Signals bis zur Umsetzung durch die Leuchten des in Figur 1 gezeigten Systems;

Figur 3 eine schematische Darstellung zur Verdeutlichung des erfindungsgemäßen Verhaltens der verschiedenen Leuchten des in Figur 1 gezeigten Systems und

Figur 4 ein Beispiel einer Matrix zum Speichern der Übermittlungszeiten.

Die Erfindung wird nachfolgend anhand eines Beleuchtungssystems näher erläutert, bei dem Steuerbefehle drahtlos -also z.B. per Funk oder Infrarot - an verteilt angeordnete Leuchten des Systems übermittelt werden. Wie bereits erwähnt ist allerdings die vorliegende Erfindung nicht auf Beleuchtungssysteme beschränkt, auch wenn hier zeitliche Abweichungen der Einheiten des Systems am leichtesten wahrnehmbar sind. Jedoch kann auch bei anderen Systemen, beispielsweise bei einem System zum zentralen Ansteuern von Abschattungseinrichtungen wie Jalousien oder dergleichen ein synchrones Verhalten der verschiedenen Einheiten gewünscht sein, weshalb die Erfindung sehr vielseitig einsetzbar ist.

Des Weiteren ist die erfindungsgemäße Vorgehensweise auch in einfacher Weise auf Systeme, bei denen die Signalübermittlung nicht drahtlos sondern stattdessen über entsprechende physische Leitungen erfolgt, übertragbar. Dies kann beispielsweise insbesondere dann der Fall sein, wenn komplexe Bus-Systeme vorliegen, bei denen mehrere unterschiedliche Teilsysteme miteinander verbunden sind und dementsprechend wiederum an den Schnittstellen zwangsläufig eine Wiederholung des Steuerbefehls erfolgen muss.

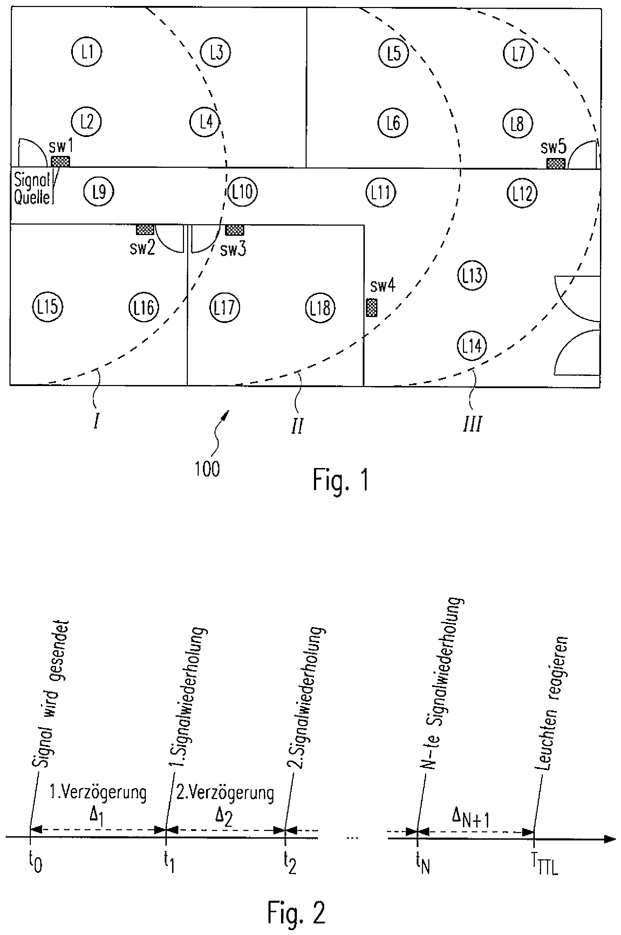

Figur 1 zeigt in diesem Zusammenhang schematisch beispielsweise ein Stockwerk eines Gebäudes, in dem ein allgemein mit dem Bezugszeichen 100 versehenes Beleuchtungssystem zum Einsatz kommt. Im dargestellten Ausführungsbeispiel weist das Beleuchtungssystem 100 mehrere verteilt angeordnete Schalter oder Sensoren sw1 bis sw5 sowie eine Vielzahl von verteilt angeordneten Leuchten L1 bis L18 auf. Wie erkennbar ist, sind die verschiedenen Schalter bzw. Sensoren sw1 bis sw5 und Leuchten L1 bis L18 nicht alle in dem gleichen Raum angeordnet, sondern können durchaus in durch Wände voneinander getrennten Räumen und Gängen angeordnet sein. Trotz allem ist erwünscht, dass bei Ausgabe eines Steuerbefehls, der alle Leuchten L1 bis L18 betrifft, die Leuchten L1 bis L18 möglichst zeitgleich diesen Befehl entsprechend umsetzen.

Dabei ist darauf hinzuweisen, dass im vorliegenden Fall mit Hilfe der Erfindung ausschließlich angestrebt wird, dass sich die Leuchten L1 bis L18 zeitlich synchron verhalten, also beispielsweise einen globalen Steuerbefehl gleichzeitig ausführen. Unerheblich ist hingegen, in welcher Weise der Befehl dann tatsächlich durch die Leuchten L1 bis L18 umgesetzt wird. Das heißt, es kann durchaus sein, dass ein Befehl einzelne Leuchten dazu veranlasst, eine Lichtabgabe mit maximaler Helligkeit vorzunehmen, während hingegen andere Leuchten, die sich zum Beispiel in der Nähe von Fenstern des Gebäudes befinden, eine das von außen einfallende Tageslicht berücksichtigende reduzierte Helligkeit annehmen. Gewünscht ist jedoch, dass die Leuchten L1 bis L18 unabhängig davon, welche Helligkeit sie letztendlich annehmen, den Wechsel auf die neue, durch den Steuerbefehl veranlasste Helligkeit, im Wesentlichen zeitgleich vornehmen, wobei unter zeitgleich hierbei zu verstehen ist, dass Abweichungen möglichst derart gering sind, dass sie für einen menschlichen Beobachter nicht mehr wahrnehmbar sind. Ferner schließt die Erfindung selbstverständlich nicht aus, dass ein Befehl nur einzelne oder einen Teil der Leuchten betrifft, wobei idealerweise immer diejenigen Leuchten, die gemeinsam mit einem Befehl angesprochen werden, zeitgleich reagieren sollten.

Im vorliegenden Fall wird nunmehr also davon ausgegangen, dass von dem Schalter sw1 ursprünglich ein Steuerbefehl ausgegeben wird, der alle Leuchten L1 bis L18 dazu veranlassen soll, sich einzuschalten. In gleicher Weise könnte jedoch auch der primäre Steuerbefehl von einer der Leuchten L1 bis L18 selbst ausgegeben werden, beispielsweise weil diese aufgrund einer sich verändernden Situation (zum Beispiel einer Veränderung des von außen einfallenden Tageslichts oder auch des Feststellen eines Notzustands) einen neuen Betriebszustand annehmen möchte und die weiteren Leuchten des Systems 100 sich wiederum in gleicher Weise verhalten sollen. Als Einheiten des erfindungsgemäßen Systems werden also im vorliegenden Fall sowohl die Schalter bzw. Sensoren sw1 bis sw5 als auch die Leuchten L1 bis L18 angesehen.

Im dargestellten Ausführungsbeispiel wird also - wie bereits oben erwähnt - davon ausgegangen, dass zunächst der Steuerbefehl primär durch den Schalter sw1 drahtlos übermittelt wird. Allerdings ist die Reichweite des von diesem Schalter sw1 ausgegebenen Signals beschränkt, was beispielsweise auf die verschiedenen Wände des Gebäudes, die durch das Signal nur stark abgeschwächt durchdrungen werden können, zurückzuführen ist. In gleicher Weise kann auch bei einer drahtgebundenen Signalübermittlung eine Beschränkung der Reichweite beispielsweise dadurch vorliegen, dass mehrere Untersysteme existieren und der primäre Befehlsgeber lediglich innerhalb eines Untersystems Signale übermitteln kann.

Im vorliegenden Fall ist die Reichweite des von dem Schalter sw1 ausgegebenen Signals, das den Steuerbefehl beinhaltet, durch die erste gestrichelte Kurve I dargestellt, die wie ersichtlich derart ist, dass lediglich die Leuchten L1, L2, L4, L9, L15 und L16 sowie der Schalter/Sensor sw2 das Signal empfangen. In diesem Zusammenhang wird der Einfachheit halber davon ausgegangen, dass durch die Einheiten des Systems 100 ein Signal entweder vollständig/korrekt empfangen wird oder gar nicht empfangen wird. Selbstverständlich können in Realität auch Zwischenzustände auftreten, derart, dass beispielsweise ein Signal nur unvollständig oder mit derart niedriger Intensität empfangen wird, dass es nicht mit ausreichender Sicherheit zuverlässig erkannt wird. Derartige Zwischenzustände werden der Einfachheit halber im Nachfolgenden als Nicht-Empfangen des Signals verstanden.

Das heißt also, dass der von dem Schalter sw1 ursprünglich ausgegebene Steuerbefehl nur von einem Teil der Leuchten des Systems 100 empfangen wird. Da jedoch beabsichtigt ist, dass alle Leuchten diesen Befehl umsetzen sollen, ist vorgesehen, dass - wie auch bislang bereits aus dem Stand der Technik bekannt - von zumindest einer der Leuchten, die den Steuerbefehl empfangen haben, dieser erneut übermittelt wird. Diese Signalwiederholung besitzt nunmehr eine neue Reichweite (Kurve II) und führt dazu, dass der Steuerbefehl nunmehr auch von den Leuchten L3, L5, L6, L10, L11, L17 und L18 empfangen wird (ebenso wie von den Schaltern sw3 und sw4). Diese Vorgehensweise setzt sich in gleicher Weise wiederholt fort. Das heißt, eine der Leuchten, die die erste Signalwiederholung empfangen haben, wird das Signal wiederum erneut - mit der Reichweite III - aussenden, so dass dieses dann im nächsten Schritt durch die Leuchten L7, L8, L12, L13 und L14 sowie den Schalter sw5 empfangen wird. Im dargestellten Ausführungsbeispiel wurde damit der Steuerbefehl von sämtlichen Einheiten des Systems 100 empfangen, wobei in Realität allerdings auch deutlich mehr Signalwiederholungen erforderlich sein können, bis schließlich der Befehl alle Einheiten erreicht hat.

In aus dem Stand der Technik bekannten Lösungen waren die Leuchten bislang derart ausgebildet, dass sie nach Empfang eines Steuerbefehls diesen möglichst umgehend umsetzten, sich also im vorliegenden Beispiel einschalten. Dies hätte zur Folge, dass das Einschalten aller Leuchten des Systems 100 kaskadenartig in drei aufeinanderfolgenden Stufen erfolgt, abhängig von den jeweiligen Signalreichweiten I, II, III des ursprünglich ausgegebenen Steuerbefehls bzw. der wiederholten Steuerbefehle. Die sich hierbei ergebenden Zeitunterschiede entstehen dabei weniger aufgrund der sich mit Lichtgeschwindigkeit ausbreitenden Signale selbst als durch die in den für die Signalwiederholung verantwortlichen Leuchten durchzuführenden Vorgänge bezüglich des Empfangs, der Verarbeitung und der erneuten Übermittlung des Signals. Diese Vorgänge führen zu Verzögerungen, welche letztendlich zu einem aufeinanderfolgenden Einschalten der Leuchtengruppen führen, was für einen Beobachter durchaus erkennbar ist.

In der Vergangenheit wurde hierbei versucht, diese Verzögerungszeiten möglichst gering zu halten, um derartige Effekte zu reduzieren. Da allerdings die Vorgänge zum Verarbeiten und erneuten Senden der Signale nicht beliebig verkürzt werden können, führte dies nicht zu vollständig überzeugenden Lösungen. Die vorliegende Erfindung schlägt demgegenüber eine neuartige Vorgehensweise vor, mit der die oben beschriebenen Probleme in eleganter und effizienter Weise vermieden werden können.

Vereinfacht gesagt sieht das erfindungsgemäße Verfahren vor, dass die Leuchten des Beleuchtungssystems 100 nach Empfang eines Steuerbefehls mit dessen Ausführung solange warten, bis sichergestellt ist, dass auch die letzte Leuchte des Systems 100 den Befehl empfangen hat und ihn umsetzen kann. Erst zu diesem Zeitpunkt führen dann alle Leuchten mehr oder weniger gleichzeitig den Befehl aus, wobei die verbleibenden Zeitunterschiede derart gering sind, dass sie für einen menschlichen Beobachter nicht mehr wahrnehmbar sind.

Vereinfacht soll das erfindungsgemäße Prinzip zunächst anhand von Figur 2 erläutert werden. Gezeigt ist hierbei der zeitliche Verlauf nach Beginn der ursprünglichen Übermittlung des Steuerbefehls bis zu dessen Umsetzung.

Es erfolgt also zum Zeitpunkt to die erstmalige Signalausgabe, wobei zum Zeitpunkt $t_1$ erstmalig das Signal durch eine Einheit des Systems wiederholt wird. In dem zwischen den Zeitpunkten to und $t_1$ liegenden Zeitraum mit der Dauer $\Delta_1$ (genaugenommen zu Beginn dieses Zeitraums) werden alle Leuchten den Steuerbefehl empfangen, die innerhalb der Signalreichweite des primären Befehlsgebers sind, im oben beschriebenen Beispiel innerhalb der Reichweite des Schalters sw1. Hierunter befindet sich auch zum Beispiel diejenige Einheit, die für die erneute Signalausgabe zum Zeitpunkt $t_1$ verantwortlich ist. Die Verzögerungsdauer $\Delta_1$ ergibt sich hierbei insbesondere aus den für den Empfang, die Verarbeitung und Signalübermittlung erforderlichen Arbeitsschritten innerhalb dieser Einheit.

In dem sich daran anschließenden Verzögerungszeitraum $\Delta_2$ empfangen dann diejenigen Leuchten den Befehl, die sich in Signalreichweite der das Signal erstmalig wiederholenden Leuchte befinden. Eine zweite Wiederholung des Steuerbefehls durch zumindest eine dieser Leuchten erfolgt zum Zeitpunkt $t_2$. Dieser Vorgang wiederholt sich bis zum Zeitpunkt $t_N$, zu dem das Signal bzw. der Steuerbefehl letztmalig zum N-ten mal wiederholt wird. Dieses Signal wird dann durch die letzten verbleibenden Leuchten des Systems erfasst und diese sind nach einem abschließenden Verzögerungszeitraum $A_{N+1}$ - der von den Leuchten benötigt wird, um den Befehl zu bewerten und dessen Ausführung vorzubereiten - zum Zeitpunkt $T_{TTL}$ (wobei die Abkürzung TTL für Time-To-Light steht) in der Lage, den Befehl auszuführen.

Erfindungsgemäß ist nunmehr vorgesehen, dass allen Teilnehmern des Systems der Zeitpunkt $T_{TTL}$ bekannt ist und erst zu diesem Zeitpunkt der Befehl umgesetzt wird, unabhängig davon, zu welchem Zeitpunkt die einzelne Leuchte den Befehl tatsächlich empfangen hat. Das heißt, alle Leuchten warten gemeinsam den Zeitpunkt $T_{TTL}$ ab und führen dann gemeinsam und synchron den Befehl aus.

Damit jede Leuchte für sich individuell feststellen kann, wie lange sie bis zum Ausführen des empfangenen Befehls warten muss, müssen zwei Voraussetzungen erfüllt sein.

Zum Einen muss die Leuchte die Gesamtdauer $T_{TTL}$ kennen, welche nachfolgend auch als globale Übermittlungsdauer bezeichnet wird und angibt, wie lang es nach Ausgabe des ursprünglichen Signals dauert, bis sämtliche Teilnehmer des Systems den Befehl empfangen haben und in der Lage sind, ihn umzusetzen.

Zum anderen muss jede Leuchte bei Empfangen des Signals wissen, wie viel Zeit bereits seit der ursprünglichen Übermittlung des Signals vergangen ist.

In diesem Zusammenhang wäre es in einem ersten Schritt denkbar, davon auszugehen, dass die Verzögerungen für die Signalwiederholung, also die in Figur 2 gezeigten Zeiträume $\Delta_1$ bis $\Delta_N$ jeweils gleich groß sind. Dies würde allerdings voraussetzen, dass sämtliche Teilnehmer des Systems hinsichtlich der für den Signalempfang und die Weiterleitung verantwortlichen Komponenten identisch ausgebildet sind und dementsprechend tatsächlich gleich viel Zeit hierfür benötigen. Da allerdings das erfindungsgemäße System möglichst flexibel sein sollte und insbesondere auch bei Verwendung unterschiedlicher Leuchtentypen mit unterschiedlichen zugehörigen Elektroniken trotz allem ein synchrones Arbeiten gewährleisten sollte, muss davon ausgegangen werden, dass die Verzögerungszeiten tatsächlich davon abhängig sind, welche Leuchte bzw. allgemein welcher Teilnehmer des Systems eine Signalwiederholung vornimmt.

Um dies berücksichtigen zu können ist erfindungsgemäß vorgesehen, dass bei Übermittlung und Wiederholung des Steuerbefehls dieser zusätzlich mit einer Information hinsichtlich der bereits vergangenen Befehlsübermittlungszeit ergänzt wird und diese Information jeweils durch die Leuchte, die einen Befehl wiederholt, entsprechend aktualisiert wird. Jede Leuchte, die dann einen Befehl empfängt, kann anhand der in dem Befehl enthaltenen Befehlsübermittlungszeit also feststellen, wie viel Zeit bereits vergangen ist. Auf Basis dieser Information sowie der Kenntnis hinsichtlich der globalen Befehlsübermittlungsdauer kann dann jede Leuchte für sich individuell ermitteln, wie lange sie warten muss, bevor sie den Befehl tatsächlich ausführt.

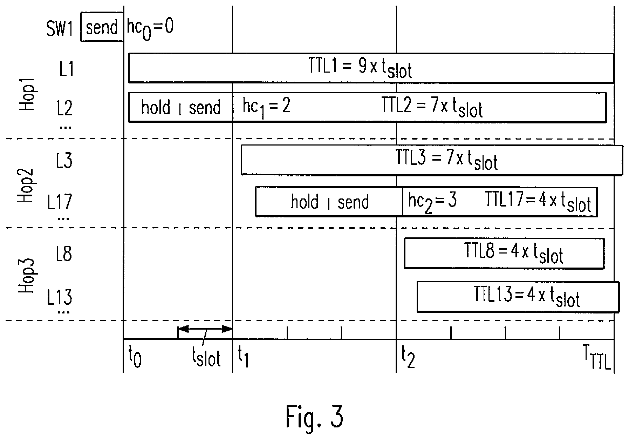

Diese Vorgehensweise soll nachfolgend anhand von Figur 3 näher erläutert werden, welche sich auf das in Figur 1 gezeigte Szenario bezieht, bei dem zum Zeitpunkt $t_0$ durch den Schalter sw1 ursprünglich der Steuerbefehl ausgegeben wird. Ferner wird das Signal zum Zeitpunkt $t_1$ durch die Leuchte L2 sowie zum Zeitpunkt $t_2$ durch die Leuchte L17 wiederholt, wobei nach der zweiten Signalwiederholung sämtliche Leuchten des Systems 100 den Befehl empfangen haben.

Dabei ist darauf hinzuweisen, dass vorzugsweise aus praktischen Gründen die Angabe bzw. Berechnung der Befehlsübermittlungszeit, der Wartezeit sowie der globalen Übermittlungsdauer nicht in absoluten Zeitangaben wie beispielsweise Millisekunden oder Mikrosekunden erfolgt sondern stattdessen eine normierte Angabe in diskreten Zeitschritten erfolgt. Der Vorteil dieser Vorgehensweise besteht darin, dass alle Zeitwerte in natürlichen, ganzen Zahlen angegeben werden und dementsprechend einfach in das Signal integriert werden können. Der Aufwand zum Übermitteln und Berechnen absoluter Zeitwerte wäre demgegenüber deutlich aufwändiger.

Diese angesprochenen diskreten Zeitschritte sind auf so genannte Slotwerte $t_{slot}$ normiert, wobei dieser Zeitschritt $t_{slot}$ maximal der kürzesten Verzögerungszeit einer Signalwiederholung entsprechen sollte, idealerweise jedoch geringer ist. Die aufgrund der Signalwiederholung durch einen bestimmten Teilnehmer des Systems hervorgerufene Verzögerungszeit $\Delta_n$ wird dann bei dem erfindungsgemäßen Verfahren in ganzzahligen Werten, den so genannten Hop Counts angegeben, die sich wie folgt berechnen:

$$ hc_n = \Delta_n / t_{slot} $$

Diese Verzögerungszeiten werden dann wie bereits erwähnt dem Steuerbefehl hinzugefügt und versetzen die Leuchten wie nachfolgend näher beschrieben in die Lage, für sich individuell zu bestimmen, wie lange sie mit der Ausführung des empfangenen Steuerbefehls warten müssen.

Bei dem in den Figuren 1 und 3 dargestellten Ausführungsbeispiel bedeutet dies also, dass zunächst einmal den Leuchten die Gesamtverzögerungszeit $T_{TTL}$ bekannt ist, die normiert auf die Timeslots nunmehr 9 sogenannte Hop Counts beträgt. Wird nunmehr zum Zeitpunkt $t_0$ von dem Schalter sw1 der Steuerbefehl erstmalig ausgesendet, so wird diesem Befehl wie bereits oben erwähnt zusätzlich eine Information hinsichtlich der bereits vergangenen Signalübermittlungszeit hinzugefügt, die allerdings bei primärem Aussenden des Signals 0 beträgt. Der dem Steuerbefehl hinzugefügte so genannte Hop Count-Wert hc beträgt also 0.

Dieses von dem Schalter sw1 ausgegebene Signal wird - wie in Figur 3 gezeigt - beispielsweise von der Leuchte L1 empfangen, wobei der Signalempfang nahezu unmittelbar erfolgt, also die Leuchte L1 das Signal kurz nach dem Zeitpunkt $t_0$ empfängt. Auf Basis des in dem Signal enthaltenen Hop Counts hc, der wie erläutert 0 beträgt - und der bekannten globalen Übermittlungsdauer $T_{TTL} = 9$ berechnet dann die Leuchte L1 für sich eine individuelle Verzögerungszeit TTL1, die der Differenz zwischen globaler Übermittlungsdauer $T_{TTL}$ und bereits vergangener Signalübermittlungszeit entspricht, also 9 beträgt. In absoluten Zeitwerten wartet also die Leuchte L1 eine Wartezeit TTL1 ab, die 9-mal dem diskreten Zeitwert $t_{slot}$ entspricht.

Ebenso wie die Leuchte L1 empfängt auch die Leuchte L2 unmittelbar nach dem Zeitpunkt $t_0$ das von dem Schalter sw1 ausgegebene Primärsignal mit dem Hop Count hc = 0. Die Leuchte L2 ist allerdings für die Signalwiederholung verantwortlich, das heißt, sie empfängt das Signal, verarbeitet dieses und sendet dieses zum Zeitpunkt $t_1$ erneut. Hierfür benötigt die Leuchte L2 eine individuelle Verzögerungszeit $hc_1 = 2$ und fügt dementsprechend dem wiederholten Steuerbefehl einen aktualisierten Hop Count-Wert hc = 2 hinzu. Nach Ausgabe des Befehls berechnet die Leuchte L2 dann für sich eine mit Ausgabe des Befehls startende Verzögerungszeit TTL2, die wiederum der Differenz zwischen der globalen Übermittlungsdauer und der Signalverzögerungszeit entspricht und dementsprechend nunmehr 7 beträgt.

Für die weiteren Leuchten, welche unmittelbar das Primärsignal empfangen, also die Leuchten L4, L9, L15 und L16 gilt das zu der Leuchte L1 gesagte. Auch diese Leuchten empfangen also das Primärsignal mit dem Hop Count-Wert 0 und berechnen dementsprechend für sich eine Verzögerungszeit, die 9 beträgt.

Die Leuchte L3 hingegen empfängt das von der Leuchte L2 wiederholte Signal mit dem aktualisierten Hop Count-Wert 2. Nach Empfang dieses Signals berechnet die Leuchte L3 für sich wiederum eine individuelle Verzögerungszeit in analoger Weise zu den bereits diskutierten Leuchten. Es ergibt sich also ebenso wie auch bei der Leuchte L2, die ja erst nach Ausgabe des wiederholten Signals ihre Verzögerungszeit berechnet hat, eine Verzögerungszeit mit dem Wert 7. Gleiches gilt für die Leuchten L5, L6, L10. L11 und L18.

Die Vorgehensweise der für die zweite Signalwiederholung verantwortlichen Leuchte L17 ist analog zu der Vorgehensweise der Leuchte L2, wobei die Leuchte L17 eine längere Zeit $hc_2 = 3$ für die Signalwiederholung benötigt. Der Wert 3 wird nunmehr der Signalverzögerungszeit hinzugefügt, so dass sich eine aktualisierte Verzögerungszeit hc = 2 + 3 = 5 ergibt, die dem zum Zeitpunkt $t_2$ ausgegebenen Signal hinzugefügt wird. Nach Ausgabe des Signals berechnet dann die Leuchte L17 für sich eine individuelle Verzögerungszeit von 4.

Die Leuchten der dritten Gruppe, die das zum zweiten Mal wiederholte Signal alle empfangen, berechnen dann auf Basis der aktualisierten Signalverzögerungszeit hc = 5 für sich jeweils eine individuelle Verzögerungszeit 4.

Generell gilt also, dass die einem Befehl hinzugefügte Signalübermittlungszeit hc der Summe der sich durch die bisherigen Signalwiederholungen entstehenden Verzögerungszeiten hc; entspricht und demzufolge wie folgt berechnet:

$$ hc = \sum_{i=0}^{i=n} hc_i $$

Für die individuelle Verzögerungszeit $TTL_{ind}$ gilt dann jeweils:

$$TTL_{ind} = T_{TTL} - hc$$

$$TTL_{ind} = T_{TTL} - \sum_{i=0}^{i=n} hc_i$$

Jede Leuchte führt dann nach Ablauf der individuell ermittelten Verzögerungszeit den Befehl aus, wobei Figur 3 unmittelbar erkennen lässt, dass die Befehlsausführung im Wesentlichen zeitgleich erfolgt. Es liegen lediglich geringe Abweichungen voneinander vor, die sich durch die geringfügigen unterschiedlichen Signallaufzeiten ergeben, wobei diese Abweichungen allerdings deutlich unterhalb der Dauer eines einzelnen Zeitslots liegen, also derart gering sind, dass sie für einen menschlichen Beobachter nicht erkennbar sind. Letztendlich agieren alle Leuchten aus Sicht eines Beobachters zeitgleich.

Die erfindungsgemäße Vorgehensweise führt also in einfacher Weise dazu, dass aus Sicht eines Beobachters die Leuchten des Systems 100 tatsächlich synchron Befehle umsetzen, auch wenn die Befehlsübermittlung im Rahmen mehrerer Signalwiederholungen erfolgt. Dabei wurde bei obiger Schilderung lediglich der Einfachheit halber davon ausgegangen, dass die Wiederholung eines Signals jeweils nur durch eine einzelne Leuchte erfolgt. Tatsächlich wäre die erfindungsgemäße Vorgehensweise auch anwendbar, wenn beispielsweise mehrere oder sogar alle Leuchten, die in dem Übermittlungsbereich des Primärsenders - hier also des Schalters sw1- liegen, eine Wiederholung vornehmen. Es muss dann lediglich festgelegt werden, dass jede Leuchte maximal einmal eine Signalwiederholung vornimmt und nach Berechnen der individuellen Wartezeit den Eingang weiterer eventueller Signalwiederholungen ignoriert. Die Leuchten müssen also keine komplizierte Absprache dahingehend vornehmen, welche Leuchte für die jeweilige Signalwiederholung verantwortlich ist, sondern können fest nach einem vorgegebenen aber einfach durchzuführenden Schema handeln.

Ein weiterer Vorteil der erfindungsgemäßen Vorgehensweise besteht darin, dass die Leuchten selbst in verhältnismäßig einfacher Weise ihre individuelle Verzögerungszeit berechnen können, da lediglich die Differenz zwischen globaler Übermittlungsdauer und bereits vergangener Übermittlungszeit berechnet werden muss. Ist also die globale Übermittlungsdauer bekannt, so ist der Aufwand zum Berechnen der individuellen Verzögerungszeit äußerst gering. Für die Festlegung der globalen Übermittlungsdauer bestehen hingegen unterschiedliche Möglichkeiten, die nachfolgend näher erläutert werden sollen.

Eine erste Möglichkeit würde darin bestehen, für das gesamte System, wie es beispielsweise in Figur 1 gezeigt ist, eine feste, unveränderliche globale Übermittlungsdauer vorzugeben. Diese muss dann selbstverständlich derart bemessen werden, dass sie die maximale Zeit für die Übermittlungsdauer eines Signals von einem beliebigen primären Befehlsgeber zu allen Leuchten hin berücksichtigt. Dieser Fall liegt bei dem Beispiel in Figur 1 vor, bei dem sich das Signal von einem Ende des Gebäudes kontinuierlich über die gesamte Länge hinweg bis zum anderen Ende hin ausbreitet.

Würde allerdings das Primärsignal bei dem in Figur 1 gezeigten System stattdessen von dem Schalter sw3 ausgehen, so kann davon ausgegangen werden, dass sich der Befehl schneller über das gesamte System hinweg ausbreitet, da er nunmehr in zwei einander entgegengesetzte Richtungen verteilt wird und maximal eine weitere Signalwiederholung erforderlich sein wird. In diesem Fall wäre die globale Übermittlungsdauer $T_{TTL}$ = 9 zu hoch angesetzt und hätte zur Folge, dass alle Leuchten unnötig lang warten würden, bis sie dann letztendlich - allerdings wie gewünscht - synchron den Befehl umsetzen. Vorteilhaft wäre es deshalb, in diesem Fall bzw. generell eine kürzere globale Übermittlungsdauer zu wählen, die vom Ausgangspunkt des Primärsignals abhängig ist. Hierfür sind zwei Varianten denkbar.

Zum Einen könnte diejenige Einheit, die primär den Befehl übermittelt, gleichzeitig auch die globale Übermittlungsdauer festlegen und diese Information ebenfalls dem Steuerbefehl hinzufügen.

Alternativ hierzu könnte dem Steuerbefehl auch lediglich eine Information hinzugefügt werden, die Auskunft darüber gibt, welche Einheit Ursprung des Steuerbefehls war. Auf Basis dieser Information kann dann jede Leuchte die sich hieraus ergebende globale Übermittlungsdauer bestimmen und dann wiederum unter Berücksichtigung der Befehlsübermittlungszeit die individuelle Wartezeit berechnen.

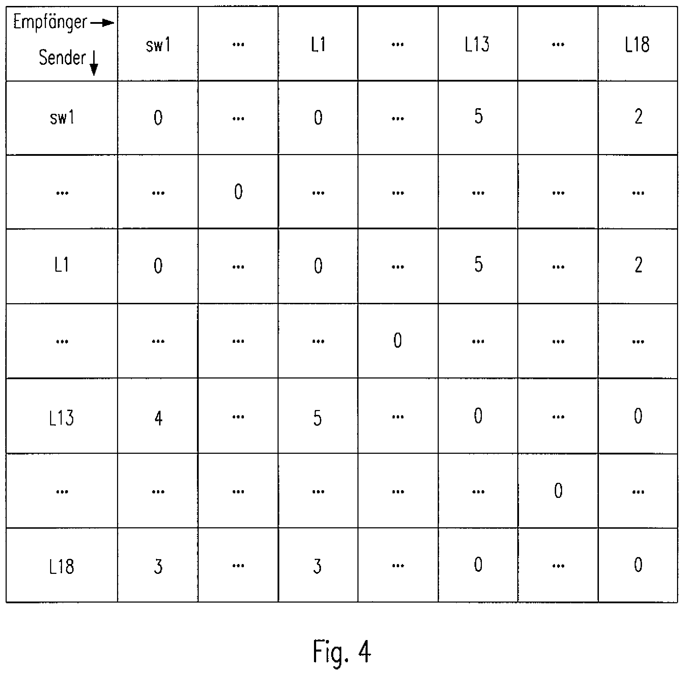

Bei beiden Varianten ist erforderlich, dass Kenntnis darüber besteht, wie lange die Übermittlung eines Signals ausgehend von einem beliebigen Befehlsgeber zu einem beliebigen Empfänger des Systems beträgt. Diese Informationen müssen zumindest bei Inbetriebnahme des Systems vorliegen bzw. ermittelt werden und werden dann vorzugsweise in einer Matrix gespeichert, wie sie schematisch in Figur 4 gezeigt ist. Der Inhalt eines Feldes der Matrix gibt dabei die Signallaufzeit (wiederum in Timeslot-Werten) zwischen den in den Zeilen angegebenen Befehlsgebern und in den Spalten angegebenen Empfängern an. Die Diagonale der Matrix bleibt dabei verständlicherweise ohne Einträge bzw. beträgt 0, da die Signallaufzeit von einem Teilnehmer des Systems zu sich selbst immer gleich 0 beträgt. Wird allerdings nunmehr ein Primärsignal von einem bestimmten Teilnehmer des Systems ausgegeben, so erlaubt der Maximalwert der in der entsprechenden Zeile enthaltenen Einträge die Bestimmung der globalen Übermittlungsdauer.

Die Kenntnis dieser Matrixeinträge erlaubt es also entweder dem Ursprungspunkt des Signals, also dem primären Befehlsgeber, dem Steuerbefehl unmittelbar die globale Übermittlungsdauer hinzuzufügen, oder jeder empfangenden Leuchte in Kenntnis des Ursprungs des Signals die globale Übermittlungsdauer zu bestimmen. Auch hier ist wiederum von Vorteil, dass die Signallaufzeiten in diskreten, ganzzahligen Werten angegeben werden, da hierdurch der Aufwand zum Speichern der Matrix deutlich reduziert wird. Darüber hinaus können auch aus dem Stand der Technik bekannte Komprimierungsalgorithmen eingesetzt werden, um den Speicherbedarf weiter zu reduzieren.

Die Signallaufzeiten und damit der Inhalt der Matrix müssen wie bereits erwähnt bei Inbetriebnahme des Systems ermittelt werden. Vorzugsweise ist vorgesehen, dass darüber hinaus auch während des Betriebs des Systems zumindest in regelmäßigen Abständen eine Aktualisierung der Matrixeinträge stattfindet, da Umgestaltungen nicht nur des Systems selbst sondern auch von äußeren Einflüssen durchaus zu deutlichen Änderungen hinsichtlich der Signallaufzeiten führen können. Beispielsweise kann das Hinzufügen von Wänden oder sogar Möbeln innerhalb des Gebäudes dazu führen, dass sich ein Signal nunmehr deutlich auf unterschiedlichem Weg und damit schneller oder langsamer ausbreitet.

Letztendlich führen allerdings die oben beschriebenen Maßnahmen dazu, dass das Verhalten der verschiedenen Teilnehmer des Systems deutlich besser zeitlich aufeinander abgestimmt werden kann und somit beispielsweise bei einem Beleuchtungssystem das Gesamterscheinungsbild der Beleuchtung deutlich verbessert werden kann. Wie bereits erwähnt besteht ein besonderer Vorteil der erfindungsgemäßen Vorgehensweise dabei auch darin, dass der Aufwand zum Realisieren des Verfahrens verhältnismäßig gering ist.

**Patentansprüche**

1. Verfahren zur Übermittlung von Steuerbefehlen in einem System (100) verteilt angeordneter Einheiten (L1-L18), insbesondere in einem Beleuchtungssystem mit verteilt angeordneten Leuchten,

   wobei zumindest ein Teil der verteilt angeordneten Einheiten (L1-L18) einen empfangenen Steuerbefehl erneut sendet, um eine Weiterleitung des empfangenen Steuerbefehls an alle verteilt angeordneten Einheiten (L1-L18) sicherzustellen,
   **dadurch gekennzeichnet,**
   **dass** der empfangene Steuerbefehl einen Wert einer bereits vergangenen Befehlsübermittlungszeit beinhaltet, und
   **dass** jede verteilt angeordnete Einheit (L1-L18), die einen empfangenen Steuerbefehl erneut sendet, eine individuelle den Empfang und die Weiterleitung berücksichtigende Verzögerungszeit kennt und diese dem in dem empfangenen Steuerbefehl enthaltenen Wert der vergangenen Befehlsübermittlungszeit hinzufügt und den Steuerbefehl mit dem hierdurch aktualisierten Wert der vergangenen Befehlsübermittlungszeit erneut sendet, und
   wobei jede verteilt angeordnete Einheit (L1-L18), eine jeweilige individuelle Wartezeit (TTL$_{ind}$) bestimmt, nach deren Ablauf der jeweils empfangene Steuerbefehl durch die jeweilige Einheit (L1-L18) ausgeführt wird,
   wobei eine Einheit (L1-L18) der verteilt angeordneten Einheiten (L1-L18), die einen empfangenen Steuerbefehl erneut sendet, auf Basis des aktualisierten Werts der vergangenen Befehlsübermittlungszeit die individuelle Wartezeit (TTL$_{ind}$), durch Berechnen der Differenz zwischen einer jeder der verteilt angeordneten Einheiten (L1-L18) bekannten globalen Übermittlungsdauer (T$_{TTL}$) und dem aktualisierten Wert der vergangenen Befehlsübermittlungszeit, bestimmt, und
   wobei eine Einheit (L1-L18) der verteilt angeordneten Einheiten, die einen empfangenen Steuerbefehl nicht erneut sendet, auf Basis des in einem empfangenen Steuerbefehl enthaltenen Werts der vergangenen Befehlsübermittlungszeit die jeweilige individuelle Wartezeit (TTL$_{ind}$), durch Berechnen der Differenz zwischen der jeder der verteilt angeordneten Einheiten (L1-L18) bekannten globalen Übermittlungsdauer (T$_{TTL}$) und dem Wert der vergangenen Befehlsübermittlungszeit, bestimmt,
   wobei die globale Übermittlungsdauer (T$_{TTL}$) angibt innerhalb welcher Zeit alle verteilt angeordneter Einheiten (L1-L18) den Steuerbefehl empfangen werden.

2. Verfahren nach Anspruch 1,
   **dadurch gekennzeichnet,**
   **dass** die globale Übermittlungsdauer (T$_{TTL}$) eine feste, unveränderliche globale Übermittlungsdauer (T$_{TTL}$) ist.

3. Verfahren nach Anspruch 1,
   **dadurch gekennzeichnet,**
   **dass** die globale Übermittlungsdauer (T$_{TTL}$) wählbar ist.

4. Verfahren nach Anspruch 3,
   **dadurch gekennzeichnet,**

   **dass** die wählbare globale Übermittlungsdauer (T$_{TTL}$) durch einen Befehlsgeber, der Teil des Systems (100) ist und erstmalig den Steuerbefehl sendet, festgelegt wird und dem Steuerbefehl hinzugefügt wird,
   oder
   der Steuerbefehl eine Information aufweist, die Auskunft darüber gibt, welche Einheit des Systems (100) als Befehlsgeber erstmalig den Steuerbefehl gesendet hat, wobei die verteilt angeordneten Einheiten (L1-L18) dazu ausgestaltet sind auf Basis dieser Information die wählbare globale Übermittlungsdauer ($T_{TTL}$) zu bestimmen.

5. Verfahren nach einem der vorherigen Ansprüche, **dadurch gekennzeichnet,**
dass die Angabe des jeweiligen Werts der vergangenen Befehlsübermittlungszeit, der individuellen Wartezeit sowie der globalen Übermittlungsdauer in diskreten Zeitschritten erfolgt.

6. System (100) mit verteilt angeordneten Einheiten (L1-L18), insbesondere ein Beleuchtungssystem mit verteilt angeordneten Leuchten,

wobei nach Aussenden eines Steuerbefehls zumindest ein Teil der verteilt angeordneten Einheiten (L1-L18) den empfangenen Steuerbefehl erneut sendet, um eine Weiterleitung des Steuerbefehls an alle verteilt angeordente Einheiten (L1-L18) sicherzustellen,
**dadurch gekennzeichnet,**
dass der Steuerbefehl einen Wert einer bereits vergangenen Befehlsübermittlungszeit beinhaltet und
dass jede verteilt angeordnete Einheit (L1-L18), die einen empfangenen Steuerbefehl erneut sendet, eine individuelle den Empfang und die Weiterleitung berücksichtigende Verzögerungszeit kennt und diese der in dem Steuerbefehl enthaltenen Wert der vergangenen Befehlsübermittlungszeit hinzufügt und den Steuerbefehl mit der hierdurch erhaltenen aktualisierten Befehlsübermittlungszeit erneut sendet, und wobei jede der verteilt angeordneten Einheiten (L1-L18), eine jeweilige individuelle Wartezeit ($TTL_{ind}$) bestimmt, nach deren Ablauf der empfangene Steuerbefehl durch die jeweilige Einheit (L1-L18) ausgeführt wird,
wobei eine Einheit (L1-L18) der verteilt angeordneten Einheiten, die einen empfangenen Steuerbefehl erneut sendet, auf Basis des aktualisierten Werts der vergangenen Befehlsübermittlungszeit die individuelle Wartezeit ($TTL_{ind}$), durch Berechnen der Differenz zwischen einer jeder der verteilt angeordneten Einheiten (L1-L18) bekannten globalen Übermittlungsdauer ($T_{TTL}$) und dem aktualisierten Wert der vergangenen Befehlsübermittlungszeit, bestimmt, und wobei eine Einheit (L1-L18) der verteilt angeordneten Einheiten, die einen empfangenen Steuerbefehl nicht erneut sendet, auf Basis des in einem empfangenen Steuerbefehl enthaltenen Werts der vergangenen Befehlsübermittlungszeit die jeweilige individuelle Wartezeit ($TTL_{ind}$), durch Berechnen der Differenz zwischen der jeder der verteilt angeordneten Einheiten (L1-L18) bekannten globalen Übermittlungsdauer ($T_{TTL}$) und dem Wert der vergangenen Befehlsübermittlungszeit, bestimmt, wobei die globale Übermittlungsdauer ($T_{TTL}$) angibt innerhalb welcher Zeit alle verteilt angeordneter Einheiten (L1-L18) den Steuerbefehl empfangen werden.

7. System nach Anspruch 6,
**dadurch gekennzeichnet,**
dass die globale Übermittlungsdauer ($T_{TTL}$) eine feste, unveränderliche globale Übermittlungsdauer (TTTL) ist.

8. System nach Anspruch 6,
**dadurch gekennzeichnet,**
dass die globale Übermittlungsdauer ($T_{TTL}$) wählbar ist.

9. System nach Anspruch 8,
**dadurch gekennzeichnet,**

dass die wählbare globale Übermittlungsdauer ($T_{TTL}$)
durch einen Befehlsgeber, der Teil des Systems (100) ist und erstmalig den Steuerbefehl sendet, festgelegt wird und dem Steuerbefehl hinzugefügt wird, oder
der Steuerbefehl eine Information aufweist, die Auskunft darüber gibt, welche Einheit des Systems (100) als Befehlsgeber erstmalig den Steuerbefehl gesendet hat, wobei die verteilt angeordneten Einheiten (L1-L18) dazu ausgestaltet sind auf Basis dieser Information die wählbare globale Übermittlungsdauer ($T_{TTL}$) zu bestimmen.

10. System nach einem der Ansprüche 6 bis 9,
**dadurch gekennzeichnet,**
dass die Angabe des jeweiligen Werts der vergangenen Befehlsübermittlungszeit, der individuellen Wartezeit sowie der globalen Übermittlungsdauer in diskreten Zeitschritten erfolgt.

**Claims**

1. Method for transmitting control commands in a system (100) of distributed units (L1-L18), in particular in an illumination system having distributed luminaires,

at least some of the distributed units (L1-L18) retransmitting a received control command to ensure the received control command is forwarded to all distributed units (L1-L18),
**characterized in**

**that** the received control command includes a value of a command transmission time that has already elapsed, and

**that** each distributed unit (L1-L18), which retransmits a received control command, recognizes an individual delay time taking into account the receiving and the forwarding, and adds it to the value of the elapsed command transmission time contained in the received control command and retransmits the control command with the value of the elapsed command transmission time updated thereby, and

each distributed unit (L1-L18) determining a relevant individual waiting time ($TTL_{ind}$), after the expiry of which the control command received in each case is executed by the relevant unit (L1-L18),

a unit (L1-L18) of the distributed units (L1-L18) which retransmits a received control command, determining, on the basis of the updated value of the elapsed command transmission time, the individual waiting time ($TTL_{ind}$) by calculating the difference between a global transmission duration ($T_{TTL}$) known to each of the distributed units (L1-L18), and the updated value of the elapsed command transmission time, and

a unit (L1-L18) of the distributed units which does not retransmit a received control command determining, on the basis of the value of the elapsed command transmission time contained in a received control command, the relevant individual waiting time ($TTL_{ind}$) by calculating the difference between the global transmission duration ($T_{TTL}$) known to each of the distributed units (L1-L18) and the value of the elapsed command transmission time,

the global transmission duration ($T_{TTL}$) indicating within which time all distributed units (L1-L18) will receive the control command.

2. Method according to claim 1, **characterized in** **that** the global transmission duration ($T_{TTL}$) is a fixed, unchangeable global transmission duration ($T_{TTL}$).

3. Method according to claim 1, **characterized in** **that** the global transmission duration ($T_{TTL}$) can be selected.

4. Method according to claim 3, **characterized in**

**that** the selectable global transmission duration ($T_{TTL}$) is defined and added to the control command by a command generator which is part of the system (100) and for the first time transmits the control command,

or

the control command has information which provides information about which unit of the system (100) has transmitted the control command for the first time as a command generator, the distributed units (L1-L18) being designed to determine the selectable global transmission duration ($T_{TTL}$) on the basis of this information.

5. Method according to any of the preceding claims, **characterized in** **that** the relevant value of the elapsed command transmission time, the individual waiting time, and the global transmission duration are indicated in discrete time steps.

6. System (100) comprising distributed units (L1-L18), in particular an illumination system having distributed luminaires,

after a control command has been transmitted, at least some of the distributed units (L1-L18) retransmitting the received control command in order to ensure the control command is forwarded to all of the distributed units (L1-L18), **characterized in** **that** the control command includes a value of an already elapsed command transmission time, and

**that** each distributed unit (L1-L18), which retransmits a received control command, recognizes an individual delay time taking into account the receiving and the forwarding, and adds it to the value of the elapsed command transmission time contained in the control command and retransmits the control command with the updated command transmission time obtained thereby, and

each of the distributed units (L1-L18) determining a relevant individual waiting time ($TTL_{ind}$), after the expiry of which the received control command is executed by the relevant unit (L1-L18),

a unit (L1-L18) of the distributed units which retransmits a received control command determining, on the basis of the updated value of the elapsed command transmission time, the individual waiting time ($TTL_{ind}$) by calculating the difference between a global transmission duration ($T_{TTL}$) known to each of the distributed units (L1-L18) and the updated value of the elapsed command transmission time, and a unit (L1-L18) of the distributed units that does not retransmit a received control command determining, on the basis of the value of the elapsed command transmission time contained in a received control command, the relevant individual waiting time ($TTL_{ind}$) by calculating the difference between the global transmission duration ($T_{TTL}$) known to each of the distributed units (L1-L18) and the value of the elapsed command transmission time,

the global transmission duration ($T_{TTL}$) indicating within which time all distributed units (L1-L18) will receive the control command.

7. System according to claim 6,
   **characterized in**
   **that** the global transmission duration ($T_{TTL}$) is a fixed, unchangeable global transmission duration (TTTL).

8. System according to claim 6,
   **characterized in**
   **that** the global transmission duration ($T_{TTL}$) can be selected.

9. System according to claim 8,
   **characterized in**

   **that** the selectable global transmission duration ($T_{TTL}$)

   is defined by a command generator, which is part of the system (100) and for the first time transmits the control command, and is added to the control command, or

   the control command has information which provides information about which unit of the system (100) has transmitted the control command for the first time as a command generator, the distributed units (L1-L18) being designed to determine the selectable global transmission duration ($T_{TTL}$) on the basis of this information.

10. System according to any of claims 6 to 9,
    **characterized in**
    **that** the relevant value of the elapsed command transmission time, the individual waiting time, and the global transmission duration are indicated in discrete time steps.

## Revendications

1. Procédé permettant la transmission d'instructions de commande dans un système (100) d'unités (L1-L18) réparties, en particulier dans un système d'éclairage comportant des luminaires répartis,

   dans lequel au moins une partie des unités (L1-L18) réparties envoient de nouveau une instruction de commande reçue pour assurer un transfert de l'instruction de commande reçue à toutes les unités (L1-L18) réparties,
   **caractérisé en ce que**

l'instruction de commande reçue comprend une valeur d'un temps de transmission d'instruction déjà passé, et

**que** chaque unité (L1-L18) répartie qui envoie de nouveau une instruction de commande reçue connaît un retard individuel prenant en compte la réception et le transfert et ajoute ledit retard à la valeur du temps de transmission d'instruction passé contenue dans l'instruction de commande reçue et envoie de nouveau l'instruction de commande avec la valeur ainsi mise à jour du temps de transmission d'instruction passé, et dans lequel chaque unité (L1-L18) répartie détermine un temps d'attente individuel ($TTL_{ind}$) respectif, après l'écoulement duquel l'instruction de commande respectivement reçue est exécutée par l'unité (L1-L18) respective,

dans lequel une unité (L1-L18) des unités (L1-L18) réparties, laquelle envoie de nouveau une instruction de commande reçue, détermine, sur la base de la valeur mise à jour du temps de transmission d'instruction passé, le temps d'attente individuel ($TTL_{ind}$) en calculant la différence entre une durée de transmission globale ($T_{TTL}$) connue de chacune des unités (L1-L18) réparties et la valeur mise à jour du temps de transmission d'instruction passé, et

dans lequel une unité (L1-L18) des unités réparties, laquelle n'envoie pas de nouveau une instruction de commande reçue, détermine, sur la base de la valeur du temps de transmission d'instruction passé contenue dans une instruction de commande reçue, le temps d'attente individuel ($TTL_{ind}$) respectif en calculant la différence entre la durée de transmission globale ($T_{TTL}$) connue de chacune des unités (L1-L18) réparties et la valeur du temps de transmission d'instruction passé,

dans lequel la durée de transmission globale ($T_{TTL}$) indique dans quel délai toutes les unités (L1-L18) réparties reçoivent l'instruction de commande.

2. Procédé selon la revendication 1,
   **caractérisé en ce que**
   la durée de transmission globale ($T_{TTL}$) est une durée de transmission globale ($T_{TTL}$) fixe et invariable.

3. Procédé selon la revendication 1,
   **caractérisé en ce que**
   la durée de transmission globale ($T_{TTL}$) peut être sélectionnée.

4. Procédé selon la revendication 3,
   **caractérisé en ce que**

   au moyen d'un émetteur d'instruction faisant partie du système (100) et envoyant l'instruction de commande pour la première fois, la durée de transmission globale ($T_{TTL}$) pouvant être sélectionnée est définie et est ajoutée à l'instruction de commande,
ou
l'instruction de commande présente des informations qui indiquent quelle unité du système (100) a envoyé pour la première fois l'instruction de commande en tant qu'émetteur d'instruction, dans lequel les unités (L1-L18) réparties sont configurées pour déterminer la durée de transmission globale ($T_{TTL}$) pouvant être sélectionnée sur la base desdites informations.

5. Procédé selon l'une des revendications précédentes,
**caractérisé en ce que**
l'indication de la valeur respective du temps de transmission d'instruction passé, du temps d'attente individuel et de la durée de transmission globale est effectuée par étapes temporelles discrètes.

6. Système (100) comportant des unités (L1-L18) réparties, en particulier système d'éclairage comportant des luminaires répartis,

dans lequel, après l'envoi d'une instruction de commande, au moins une partie des unités (L1-L18) réparties envoient de nouveau l'instruction de commande reçue pour assurer un transfert de l'instruction de commande à toutes les unités (L1-L18) réparties,
**caractérisé en ce que**
l'instruction de commande comprend une valeur d'un temps de transmission d'instruction déjà passé et
que chaque unité (L1-L18) répartie qui envoie de nouveau une instruction de commande reçue connaît un retard individuel prenant en compte la réception et le transfert et ajoute ledit retard à la valeur du temps de transmission d'instruction passé contenue dans l'instruction de commande et envoie de nouveau l'instruction de commande avec le temps de transmission d'instruction mis à jour ainsi obtenu, et
dans lequel chacune des unités (L1-L18) réparties détermine un temps d'attente individuel ($TTL_{ind}$) respectif, après l'écoulement duquel l'instruction de commande reçue est exécutée par l'unité (L1-L18) respective,
dans lequel une unité (L1-L18) des unités réparties, laquelle envoie de nouveau une instruction de commande reçue, détermine, sur la base de la valeur mise à jour du temps de transmission d'instruction passé, le temps d'attente individuel ($TTL_{ind}$) en calculant la différence entre une durée de transmission globale ($T_{TTL}$) connue de chacune des unités (L1-L18) réparties et la valeur mise à jour du temps de transmission d'instruction passé, et dans lequel une unité (L1-L18) des unités réparties, laquelle n'envoie pas de nouveau une instruction de commande reçue, détermine, sur la base de la valeur du temps de transmission d'instruction passé contenue dans une instruction de commande reçue, le temps d'attente individuel ($TTL_{ind}$) respectif en calculant la différence entre la durée de transmission globale ($T_{TTL}$) connue de chacune des unités (L1-L18) réparties et la valeur du temps de transmission d'instruction passé,
dans lequel la durée de transmission globale ($T_{TTL}$) indique dans quel délai toutes les unités (L1-L18) réparties reçoivent l'instruction de commande.

7. Système selon la revendication 6,
**caractérisé en ce que**
la durée de transmission globale ($T_{TTL}$) est une durée de transmission globale ($T_{TTL}$) fixe et invariable.

8. Système selon la revendication 6,
**caractérisé en ce que**
la durée de transmission globale ($T_{TTL}$) peut être sélectionnée.

9. Système selon la revendication 8,
**caractérisé en ce que**

la durée de transmission globale ($T_{TTL}$) pouvant être sélectionnée
est définie et est ajoutée à l'instruction de commande par un émetteur d'instruction faisant partie du système (100) et envoyant l'instruction de commande pour la première fois, ou
l'instruction de commande présente des informations qui indiquent quelle unité du système (100) a envoyé pour la première fois l'instruction de commande en tant qu'émetteur d'instruction, dans lequel les unités (L1-L18) réparties sont configurées pour déterminer la durée de transmission globale ($T_{TTL}$) pouvant être sélectionnée sur la base desdites informations.

10. Système selon l'une des revendications 6 à 9,
**caractérisé en ce que**
l'indication de la valeur respective du temps de transmission d'instruction passé, du temps d'attente individuel et de la durée de transmission globale est effectuée par étapes temporelles discrètes.

Fig. 1

Fig. 2

SW1 | send | $hc_0 = 0$

Hop1
L1    $TTL1 = 9 \times t_{slot}$
L2    hold | send   $hc_1 = 2$    $TTL2 = 7 \times t_{slot}$
...

Hop2
L3    $TTL3 = 7 \times t_{slot}$
L17    hold | send   $hc_2 = 3$    $TTL17 = 4 \times t_{slot}$
...

Hop3
L8    $TTL8 = 4 \times t_{slot}$
L13    $TTL13 = 4 \times t_{slot}$
...

$t_0$    $t_{slot}$    $t_1$      $t_2$      $T_{TTL}$

## Fig. 3

| Empfänger → Sender ↓ | sw1 | ... | L1 | ... | L13 | ... | L18 |
|---|---|---|---|---|---|---|---|
| sw1 | 0 | ... | 0 | ... | 5 | | 2 |
| ... | ... | 0 | ... | ... | ... | ... | ... |
| L1 | 0 | ... | 0 | ... | 5 | ... | 2 |
| ... | ... | ... | ... | 0 | ... | ... | ... |
| L13 | 4 | ... | 5 | ... | 0 | ... | 0 |
| ... | ... | ... | ... | ... | ... | 0 | ... |
| L18 | 3 | ... | 3 | ... | 0 | ... | 0 |

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110305200 A1
- US 2006126617 A
- JP 2001093675 A
- EP 2440017 A2